# FASCICULE DE BREVET EUROPEEN

(11) **EP 4 320 003 B1**
(45) Date de publication et mention de la délivrance du brevet: **26.03.2025**
(21) Numéro de dépôt: 22710672.1
(22) Date de dépôt: 22.02.2022
(51) Int. Cl.: B60K 1/04, B62D 21/15

(54) **BAC POUR UNE BATTERIE D'UN VEHICULE TERRESTRE**
GEHÄUSE FÜR EINE BATTERIE EINES LANDFAHRZEUGS
CASING FOR A BATTERY OF A LAND VEHICLE

(30) Priorité: 08.04.2021 FR 2103601
(43) Date de publication de la demande: 14.02.2024
(73) Titulaire: Stellantis Auto SAS, 78300 Poissy (FR)
(72) Inventeur: KRSTIC, Dragan, 90400 DANJOUTIN (FR); CHOPARD, Sebastien, 90360 PETITEFONTAINE (FR); CADET, Stephane, 70110 LES MAGNY (FR)
(74) Mandataire: PSIP
(86) Numéro de dépôt international: PCT/FR2022/050311
(87) Numéro de publication internationale: WO 2022/214742

(56) Documents cités:
- WO-A1-2020/173650
- WO-A1-2021/124012
- DE-A1- 102012 019 922
- DE-A1- 102017 117 696
- FR-A1- 3 071 964

## Description

La présente invention revendique la priorité de la demande française N°2103601 déposée le 08.04.2021.

### Domaine technique de l'invention

L'invention concerne les véhicules terrestres, et plus précisément les batteries modulaires qui équipent de tels véhicules.

### Etat de la technique

Comme le sait l'homme de l'art, certains véhicules terrestres, éventuellement de type automobile, comprennent une batterie modulaire rechargeable, par exemple destinée à alimenter en énergie électrique au moins une machine motrice électrique de leur groupe motopropulseur (ou GMP).

Ce type de batterie comprend généralement N zones d'accueil séparées entre elles par une traverse et comportant chacune un ensemble d'au moins un module de stockage d'énergie électrique, avec N ≥ 2. Chaque module peut, par exemple, comprendre au moins une cellule électrochimique de stockage d'énergie électrique, par exemple de type lithium-ion (ou Li-ion) ou Ni-Mh ou Ni-Cd ou encore plomb.

Dans les véhicules (terrestres) précités, la batterie est généralement volumineuse et donc installée sous la structure (ou châssis), face à la chaussée, si bien qu'elle est assez exposée. Par conséquent, la batterie comprend un bac de protection comportant une plaque inférieure placée en regard de la chaussée, un cadre solidarisé fixement à la plaque inférieure et comportant les traverses séparant les zones d'accueil logeant les ensembles de module(s), ainsi qu'éventuellement un couvercle placé au-dessus des ensembles de module(s). On notera que la batterie comprend aussi généralement au moins un échangeur de chaleur placé en-dessous des zones d'accueil (entre la plaque inférieure et les ensembles de module(s)), ou bien au-dessus des zones d'accueil (entre les ensembles de module(s) et l'éventuel couvercle).

La plaque inférieure (ou « fond de bac ») doit être suffisamment solide pour garantir la protection des ensembles de module(s) ainsi que de chaque échangeur de chaleur lorsque ce dernier est placé en-dessous des ensembles de module(s). Elle est donc très fréquemment renforcée par des traverses additionnelles qui sont soudées sur sa face interne (orientée vers les ensembles de module(s)). La plaque inférieure est donc contrainte de porter une masse additionnelle importante, ce qui contraint à la soulager au moyen de vis qui la traversent, généralement dans une partie centrale, et qui traversent également l'échangeur de chaleur, le cadre et au moins partiellement l'éventuel couvercle.

Comme le sait l'homme de l'art, la traversée de chaque élément nécessite une étanchéification qui complexifie grandement la conception de la batterie, et en particulier de son bac, et dont la durabilité est limitée et le coût élevé. Ce problème est encore accru lorsque l'on vient fixer au moyen de vis un écran de protection additionnel sur la face externe de la plaque inférieure (et notamment dans une partie centrale), car cela impose de nouvelles étanchéifications.

De plus, l'ajout de traverses additionnelles pour renforcer la plaque inférieure (ou fond de bac) complexifie cette dernière et augmente sa masse et son coût. Par ailleurs, on notera que l'ajout de cales élastiques adhésives entre la plaque inférieure et l'échangeur de chaleur pour pousser l'échangeur de chaleur vers les ensembles de module(s) peut aussi endommager l'échangeur de chaleur en le comprimant en cas de choc.

FR3071964 A1 divulgue un bac pour une batterie d'un véhicule terrestre.

L'invention a donc notamment pour but d'améliorer la situation.

### Présentation de l'invention

Elle propose notamment à cet effet un bac, d'une part, destiné à faire partie d'une batterie d'un véhicule terrestre comprenant N zones d'accueil séparées entre elles par une traverse et comportant chacune un ensemble d'au moins un module de stockage d'énergie électrique, avec N ≥ 2, et, d'autre part, comprenant une plaque inférieure destinée à être installée en-dessous des zones d'accueil.

Ce bac se caractérise par le fait que sa plaque inférieure comprend des zones transversales destinées à être placées sous chaque traverse et comportant chacune au moins deux sous-zones embouties vers la traverse correspondante afin de définir autour d'elles des zones d'interface qui sont propres à encaisser des déformations en cas de choc.

Grâce à cet agencement qui permet la définition de zones d'interface encaissant les déformations, on n'a plus besoin de souder des traverses additionnelles sur la face interne de la plaque inférieure et donc on n'a plus besoin d'utiliser des vis traversantes pour soulager cette dernière, ce qui permet de s'affranchir des problèmes d'étanchéification que ces vis traversantes occasionnaient préalablement.

Le bac selon l'invention peut comporter d'autres caractéristiques qui peuvent être prises séparément ou en combinaison, et notamment :
- chaque sous-zone peut avoir une forme générale semi-sphérique ;
- chaque sous-zone peut être emboutie sur une première hauteur qui est strictement inférieure à une seconde hauteur séparant une zone d'interface d'une face inférieure d'une traverse ;
- en présence de la dernière option, la différence entre les première et seconde hauteurs peut être comprise entre 3 mm et 5 mm ;
- il peut comprendre, d'une part, des plaques de support solidarisées fixement et respectivement à une face externe de la plaque inférieure sous chacune des sous-zones et comprenant chacune un trou traversant pour le passage d'un élément de couplage, et, d'autre part, un écran de protection solidarisé fixement à ces plaques de support, et en-dessous de ces dernières, via ces éléments de couplage.

L'invention propose également une batterie propre à équiper un véhicule terrestre et comprenant, dans N zones d'accueil séparées entre elles par une traverse, un ensemble d'au moins un module de stockage d'énergie électrique, avec N ≥ 2, et au moins un échangeur de chaleur installé en-dessous ou au-dessus de ces zones d'accueil.

Cette batterie se caractérise par le fait qu'elle comprend aussi un bac du type de celui présenté ci-avant et installé en-dessous des zones d'accueil.

La batterie selon l'invention peut comporter d'autres caractéristiques qui peuvent être prises séparément ou en combinaison, et notamment :
- son échangeur de chaleur peut être installé en-dessous des zones d'accueil et peut comprendre en regard de chaque sous-zone un trou traversant ayant une forme similaire à une section dans un plan horizontal d'au moins une partie centrale de la sous-zone correspondante ;
- en présence de la dernière option, elle peut comprendre au moins une cale élastique intercalée entre l'échangeur de chaleur et la plaque inférieure et chargée de pousser l'échangeur de chaleur vers les ensembles ;
- elle peut comprendre un cadre comportant chaque traverse, dans lequel sont définies les zones d'accueil, et comprenant une face externe à laquelle est solidarisée fixement, dans une zone périphérique, la plaque inférieure. L'invention propose également un véhicule terrestre, éventuellement de type automobile, et comprenant une batterie du type de celle présentée ci-avant.

Par exemple, ce véhicule terrestre peut comprendre une structure à laquelle est solidarisée la batterie. En variante, ce véhicule terrestre peut comprendre une structure qui définit, d'une part, un cadre comportant chaque traverse et dans lequel sont définies les zones d'accueil, et, d'autre part, la plaque inférieure solidarisée fixement à une face externe de ce cadre.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective et partiellement en coupe (dans un plan vertical et longitudinal), un exemple de réalisation d'une batterie de véhicule comprenant un exemple de réalisation d'un bac selon l'invention,
[Fig. 2] illustre schématiquement, dans une vue de face du côté de la face externe, la batterie de la figure 1,
[Fig. 3] illustre schématiquement, dans une vue en perspective, un exemple d'échangeur de chaleur équipant la batterie de la figure 1, et
[Fig. 4] illustre schématiquement, dans une vue en coupe dans un plan vertical et longitudinal, un exemple de réalisation d'un bac selon l'invention auquel est solidarisé un écran de protection.

### Description détaillée de l'invention

L'invention a notamment pour but de proposer un bac BB destiné à faire partie d'une batterie BV modulaire d'un véhicule terrestre, et permettant de simplifier la conception et l'agencement de cette batterie BV.

Dans ce qui suit, on considère, à titre d'exemple non limitatif, que le véhicule terrestre est de type automobile. Il s'agit par exemple d'une voiture. Mais l'invention n'est pas limitée à ce type de véhicule terrestre. Elle concerne en effet tout type de véhicule terrestre comprenant au moins une batterie modulaire. Ainsi, elle concerne, par exemple, les véhicules terrestres (véhicules utilitaires, camping-cars, minibus, cars, camions, engins de voirie, engins de chantier, et engins agricoles, par exemple).

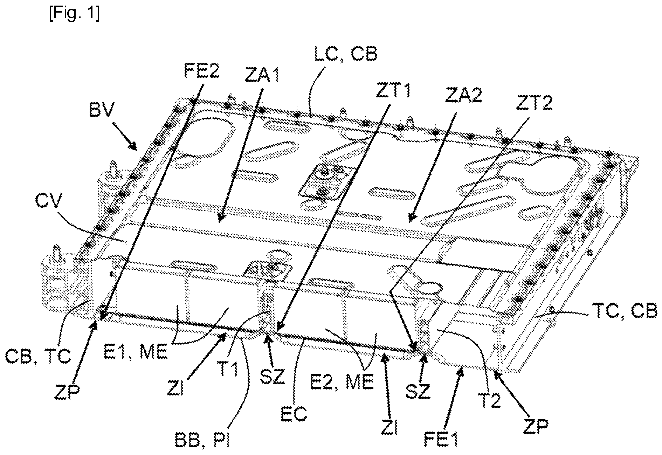

On a schématiquement illustré sur la figure 1, un exemple de réalisation d'une batterie modulaire BV destinée à équiper un véhicule (terrestre) et comprenant un exemple de réalisation d'un bac BB selon l'invention.

On considère dans ce qui suit, à titre d'exemple non limitatif, que la batterie (modulaire) BV est rechargeable et destinée à alimenter en énergie électrique au moins une machine motrice électrique du groupe motopropulseur (ou GMP) du véhicule (terrestre). Par exemple, la batterie BV peut être de type basse tension (typiquement 400 V à titre illustratif). Mais elle pourrait être de type moyenne tension ou haute tension.

On notera que la batterie BV pourrait servir à d'autres équipements du véhicule que ceux faisant partie du GMP.

Comme illustré sur la figure 1, la batterie BV comprend notamment N zones d'accueil ZAn qui sont séparées entre elles par une traverse Tj et qui comportent chacune un ensemble En d'au moins un module MS de stockage d'énergie électrique. Le nombre de modules MS peut varier d'un ensemble En à un autre En'.

Dans l'exemple illustré non limitativement, N est égal à deux (n = 1 ou 2). Mais N peut prendre n'importe quelle valeur supérieure ou égale à deux. De plus, dans l'exemple illustré non limitativement, le nombre de traverses Tj est égal à deux (j = 1 ou 2). Mais le nombre de traverses Tj peut prendre n'importe quelle valeur supérieure ou égale à un.

Par exemple, chaque module MS peut comprendre au moins une cellule électrochimique de stockage d'énergie électrique de type lithium-ion (ou Li-ion). Mais chaque cellule électrochimique pourrait être d'un autre type, comme par exemple Ni-Mh, Ni-Cd, ou plomb.

Les traverses Tj font partie d'un cadre CB dans lequel sont définies les zones d'accueil ZAn des ensembles de module(s) MS et qui comprend une face externe FE2 à laquelle est solidarisée fixement une zone périphérique ZP d'une plaque inférieure PI du bac BB. Ce cadre CB comprend deux parties longitudinales LC, parallèles entre elles et auxquelles sont solidarisées fixement les traverses Tj, et deux parties transversales TC, parallèles entre elles et dont les extrémités sont solidarisées fixement aux parties longitudinales LC. On notera que dans l'exemple illustré non limitativement sur la figure 1 le cadre CB est destiné à être solidarisé à la structure (ou châssis) du véhicule. Mais dans une variante de réalisation non illustrée, le véhicule comprend une structure (ou châssis) qui définit le cadre CB (avec ses traverses Tj), et dans ce cas les deux parties longitudinales LC sont deux longerons et les deux parties transversales TC sont deux traverses.

Comme illustré sur la figure 1, la batterie BV comprend aussi au moins un échangeur de chaleur EC chargé de refroidir (par absorption de calories) les modules MS (au moins). Dans l'exemple illustré non limitativement sur la figure 1 chaque échangeur de chaleur EC est installé en-dessous des zones d'accueil ZAn (et donc sous les modules MS), éventuellement avec interposition d'une couche de transfert (ou « thermal pad ») propre à assurer un transfert de calories homogène entre chaque échangeur de chaleur EC et chaque module MS. Mais dans une variante de réalisation non illustrée, chaque échangeur de chaleur EC pourrait être installé au-dessus des zones d'accueil ZAn (et donc au-dessus des modules MS), éventuellement avec interposition d'une couche de transfert.

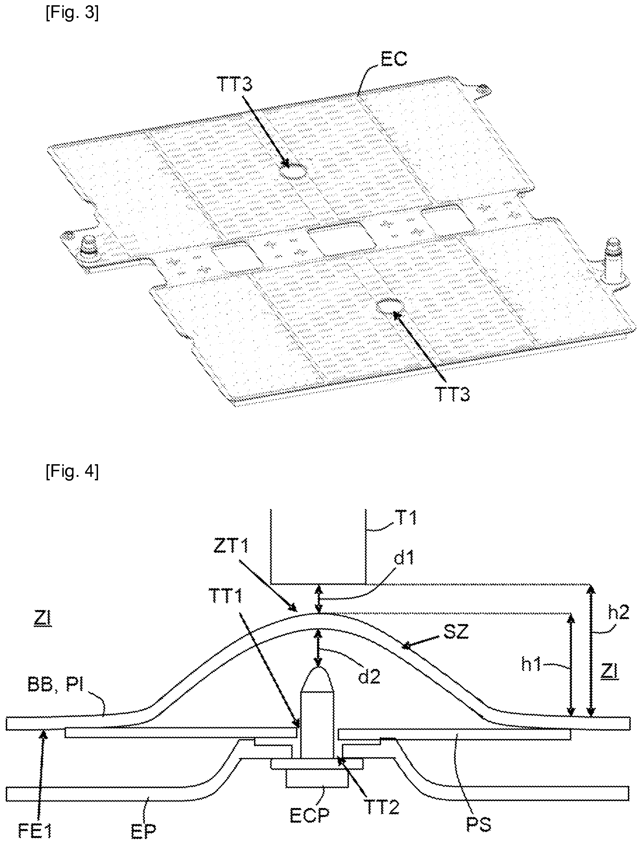

Un exemple d'échangeur de chaleur EC à plaques et très plat est illustré non limitativement sur la figure 3.

Afin de protéger, notamment, les ensembles En de module(s) MS des chocs subis par le véhicule sous son châssis, on utilise une plaque inférieure PI d'un bac BB. Cette plaque inférieure PI est destinée à être installée en-dessous des zones d'accueil ZAn. Elle comprend à cet effet une zone périphérique ZP destinée à être solidarisée fixement, et de façon étanche, à la face externe FE2 du cadre CB (ici sur les parties longitudinales LC et les parties transversales TC). Cette solidarisation fixe peut se faire par soudage étanche. Mais dans une variante elle pourrait se faire au moyen de vis avec interposition d'un joint d'étanchéité périphérique.

Comme illustré sur les figures 1, 3 et 4, cette plaque inférieure PI comprend des zones transversales ZTj qui sont destinées à être placées sous chaque traverse Tj et qui comprennent chacune au moins deux sous-zones SZ qui sont embouties vers la traverse Tj correspondante afin de définir autour d'elles (SZ) des zones d'interface ZI qui sont propres à encaisser des déformations en cas de choc. On comprendra que vue du côté de la face externe FE1 de la plaque inférieure PI (orientée vers la chaussée) chaque sous-zone (ou embouti) SZ est concave et définit une sorte d'espaceur ou d'entretoise entre le reste de sa plaque inférieure PI et les ensembles En (ou éventuellement chaque échangeur de chaleur EC), comme illustré sur les figures 3 et 4.

La définition de zones d'interface ZI encaissant les déformations autour des sous-zones (ou emboutis) SZ, permet avantageusement de ne plus avoir besoin de souder des traverses additionnelles sur la face interne de la plaque inférieure PI. Par conséquent, on n'augmente pas la masse de la plaque inférieure PI et donc on n'a plus besoin d'utiliser des vis traversantes pour la soulager, permettant ainsi de s'affranchir des problèmes d'étanchéification que ces vis traversantes occasionnaient préalablement.

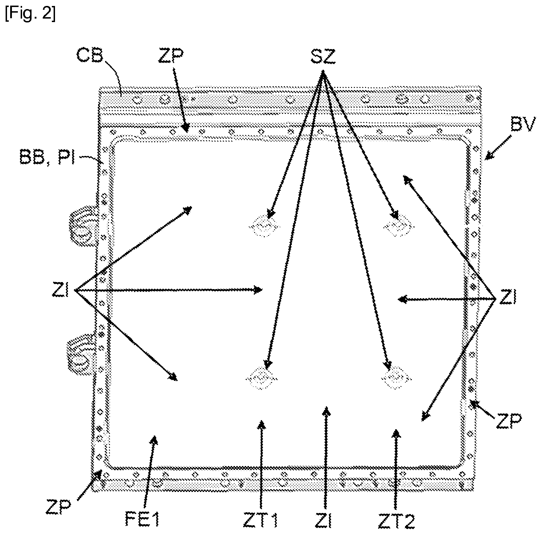

Par exemple, et comme illustré non limitativement sur les figures 1, 2 et 4, chaque sous-zone (ou embouti) SZ peut avoir une forme générale semi-sphérique. Mais d'autres formes d'emboutis SZ peuvent être envisagées. Ces sous-zones (ou emboutis) SZ peuvent être réalisées lors d'une phase d'emboutissage de la plaque inférieure PI (déjà destinée à mettre en forme d'autres parties de cette dernière (PI)).

De préférence, et comme illustré non limitativement sur la figure 4, chaque sous-zone SZ peut être emboutie sur une première hauteur h1 qui est strictement inférieure à la seconde hauteur h2 séparant une zone d'interface ZI voisine de la face inférieure de la traverse Tj voisine. En d'autres termes, il est préférable que les extrémités supérieures des sous-zones SZ ne contactent pas les faces inférieures des traverses Tj situées au-dessus d'elles. En effet, cela permet d'éviter la génération de bruits d'entrechoquement potentiellement gênants en présence de vibrations et/ou de chocs dus aux imperfections de la chaussée. Lors de l'enfoncement de la plaque inférieure PI provoqué par un choc subi par le dessous du véhicule, les emboutis SZ vont venir contacter les traverses Tj et donc créer de nouveaux appuis qui induisent une augmentation de la rigidité de la plaque inférieure PI qui lui permet de beaucoup mieux résister à l'enfoncement.

Par exemple, la différence d1 entre les première h1 et seconde h2 hauteurs peut être comprise entre 3 mm et 5 mm. Ainsi, la différence d1 peut, par exemple, être choisie égale à environ 3,5 mm. Mais il ne s'agit que d'un exemple de valeurs purement illustratif, et donc d'autres valeurs plus ou moins grandes peuvent être envisagées. Ainsi, des valeurs plus petites peuvent notamment être envisagées si l'on intercale, par exemple, une mousse antibruit entre chaque sous-zone SZ de la plaque inférieure PI et les traverses Tj. Cette mousse antibruit peut être, par exemple, une cale élastique (décrite plus loin) ou bien l'éventuelle couche de transfert (ou thermal pad) qui ne comporte alors pas de trou au niveau des sous-zones SZ.

Egalement par exemple, la plaque inférieure PI peut être réalisée en métal, comme par exemple un aluminium pour minimiser sa masse.

On notera également, comme illustré non limitativement sur la figure 4, que le bac BV peut aussi comprendre un écran de protection EP et des plaques de support PS solidarisées fixement et respectivement à la face externe FE1 de la plaque inférieure PI sous chacune de ses sous-zones SZ. Cette solidarisation fixe se fait préférentiellement par soudage (quel qu'en soit le type) ou collage, de manière à éviter l'utilisation de vis susceptibles de nécessiter localement une étanchéification.

Chaque plaque de support PS comprend un premier trou traversant TT1 permettant le passage d'un élément de couplage ECP. De plus, l'écran de protection EP est solidarisé fixement aux plaques de support PS, en-dessous de ces dernières (PS), via les éléments de couplage ECP qui traversent des seconds trous traversants TT2 qu'il comprend et qui sont centrés sur les premiers trous traversants TT1 correspondants. Cet écran de protection EP est destiné à apporter une protection complémentaire à la batterie BV.

Dans l'exemple illustré non limitativement sur la figure 4, les éléments de couplage ECP sont des vis, mais il pourrait s'agir d'agrafes, par exemple. Lorsque les éléments de couplage ECP sont des vis les premiers trous traversants TT1 sont filetés ou bien des écrous sont soudés en sortie des premiers trous traversants TT1 sur la face interne des plaques de support PS. Les logements concaves définis par les emboutis SZ sont particulièrement avantageux car ils permettent le logement d'une partie des éléments de couplage ECP après leur traversée des premiers trous traversants TT1, ce qui évite soit d'avoir à traverser la plaque inférieure PI (ce qui nécessiterait localement des étanchéifications), soit de devoir souder l'écran de protection EP sur la face externe FE1 de la plaque inférieure PI (ce qui empêcherait le remplacement de l'écran de protection EP en cas d'endommagement). De plus, en définissant aussi des emboutis additionnels dans l'écran de protection EP en regard de chaque sous-zone SZ recevant partiellement un élément de couplage ECP, il est désormais possible de loger le reste de chaque élément de couplage ECP dans cet embouti additionnel, ce qui permet d'éviter le risque d'arrachement des éléments de couplage ECP tout en respectant la garde au sol.

Les plaques de support PS étant soudées, elles sont de préférence réalisées en métal. L'écran de protection EP peut être réalisé dans une matière plastique rigide et résistante ou bien en métal.

Les plaques de support PS et/ou l'écran de protection EP peuvent être facilement ajoutés en après-vente, et donc après la sortie d'usine du véhicule. De préférence, et comme illustré non limitativement sur la figure 4, l'extrémité supérieure de chaque élément de couplage ECP est distante de la sous-zone SZ qui définit la cavité concave qui la loge d'une distance de garde d2 évitant son enfoncement (voire percement) en cas de choc important par le dessous du véhicule. Par exemple, cette distance de garde d2 peut être comprise entre 3 mm et 6 mm. Ainsi, la distance de garde d2 peut, par exemple, être choisie égale à environ 4 mm.

On notera, comme illustré non limitativement sur la figure 3, que lorsqu'un échangeur de chaleur EC est installé en-dessous d'une zone d'accueil ZAn, il comprend préférentiellement un nombre de troisièmes trous traversants TT3 qui est égal au nombre de sous-zones SZ placées en-dessous de lui (EC). Chaque troisième trou traversant TT3, placé en regard d'une sous-zone SZ a une forme qui est similaire à une section dans un plan horizontal d'au moins une partie centrale de cette sous-zone SZ. Cela permet avantageusement de ne pas endommager l'échangeur de chaleur EC lorsqu'une sous-zone SZ vient au contact d'une traverse Tj placée au-dessus d'elle (SZ) lors d'un choc subi par le dessous du véhicule.

De même, lorsqu'une couche de transfert est installée entre chaque échangeur de chaleur EC (installé en-dessous des zones d'accueil ZAn) et les ensembles de module(s) MS, cette couche de transfert comprend préférentiellement un nombre de quatrièmes trous traversants qui est égal au nombre de sous-zones SZ placées en-dessous de lui (EC).

On notera également que lorsqu'un échangeur de chaleur EC est installé en-dessous d'une zone d'accueil ZAn, la batterie BV peut comprendre au moins une cale élastique intercalée entre cet échangeur de chaleur EC et la plaque inférieure PI et chargée de pousser cet échangeur de chaleur EC vers les ensembles En. Chaque cale élastique peut, par exemple, être collée sur la face interne de la plaque inférieure PI.

On notera également que dans l'exemple illustré non limitativement sur la figure 1 le cadre CB est destiné à être solidarisé à la structure (ou châssis) du véhicule et donc fait partie du bac BV. Mais dans une variante de réalisation non illustrée dans laquelle la structure (ou châssis) du véhicule définit le cadre CB, le bac BV (et en particulier sa plaque inférieure PI) peut être aussi défini(e) par cette structure (ou châssis).

On notera également, comme illustré non limitativement sur la figure 1, que la batterie BV peut aussi, éventuellement, comprendre un couvercle CV placé au-dessus des ensembles En de module(s) MS, éventuellement avec interposition de chaque échangeur de chaleur EC. Par exemple, ce couvercle CV peut être solidarisé fixement par vissage au cadre CB, de préférence avec interposition d'un joint d'étanchéité.

## Revendications

1. Bac (BB) pour une batterie (BV) d'un véhicule terrestre comprenant N zones d'accueil (ZAn) séparées entre elles par une traverse (Tj) et comportant chacune un ensemble (En) d'au moins un module (MS) de stockage d'énergie électrique, avec N ≥ 2, ledit bac (BB) comprenant une plaque inférieure (PI) destinée à être installée en-dessous desdites zones d'accueil (ZAn), **caractérisé en ce que** ladite plaque inférieure (PI) comprend des zones transversales (ZTj) destinées à être placées sous chaque traverse (Tj) et comportant chacune au moins deux sous-zones (SZ) embouties vers la traverse (Tj) correspondante afin de définir autour d'elles (SZ) des zones d'interface (ZI) propres à encaisser des déformations en cas de choc.

2. Bac selon la revendication 1, **caractérisé en ce que** chaque sous-zone (SZ) a une forme générale semi-sphérique.

3. Bac selon la revendication 1 ou 2, **caractérisé en ce que** chaque sous-zone (SZ) est emboutie sur une première hauteur strictement inférieure à une seconde hauteur séparant une zone d'interface (ZI) d'une face inférieure d'une traverse (Tj).

4. Bac selon l'une des revendications 1 à 3, **caractérisé en ce qu'**il comprend i) des plaques de support (PS) solidarisées fixement et respectivement à une face externe (FE1) de ladite plaque inférieure (PI) sous chacune desdites sous-zones (SZ) et comprenant chacune un trou traversant (TT1) pour le passage d'un élément de couplage (ECP), et ii) un écran de protection (EP) solidarisé fixement auxdites plaques de support (PS), et en-dessous de ces dernières (PS), via lesdits éléments de couplage (ECP).

5. Batterie (BV) propre à équiper un véhicule terrestre et comprenant, dans N zones d'accueil (ZAn) séparées entre elles par une traverse (Tj), un ensemble (En) d'au moins un module (MS) de stockage d'énergie électrique, avec N ≥ 2, et au moins un échangeur de chaleur (EC) installé en-dessous ou au-dessus desdites zones d'accueil (ZAn), **caractérisée en ce qu'**elle comprend en outre un bac (BB) selon l'une des revendications précédentes, installé en-dessous desdites zones d'accueil (ZAn).

6. Batterie selon la revendication 5, **caractérisée en ce que** ledit échangeur de chaleur (EC) est installé en-dessous desdites zones d'accueil (ZAn) et comprend en regard de chaque sous-zone (SZ) un trou traversant (TT2) ayant une forme similaire à une section dans un plan horizontal d'au moins une partie centrale de la sous-zone (SZ) correspondante.

7. Batterie selon la revendication 5 ou 6, **caractérisée en ce qu'**elle comprend un cadre (CB) comportant chaque traverse (Tj), dans lequel sont définies lesdites zones d'accueil (ZAn), et comprenant une face externe (FE2) à laquelle est solidarisée fixement, dans une zone périphérique (ZP), ladite plaque inférieure (PI).

8. Véhicule terrestre, **caractérisé en ce qu'**il comprend une batterie (BV) selon l'une des revendications 5 à 7.

9. Véhicule selon la revendication 8, **caractérisé en ce qu'**il comprend une structure à laquelle est solidarisée ladite batterie (BV).

10. Véhicule selon la revendication 8, **caractérisé en ce qu'**il comprend une structure définissant i) un cadre comportant chaque traverse (Tj) et dans lequel sont définies lesdites zones d'accueil (ZAn), et ii) ladite plaque inférieure (PI) solidarisée fixement à une face externe dudit cadre.

## Patentansprüche

1. Wanne (BB) für eine Batterie (BV) eines Landfahrzeugs umfassend N Aufnahmezonen (ZAn), die durch einen Steg (Tj) voneinander getrennt sind und jeweils einen Satz (En) von mindestens einem Modul (MS) umfassen Speichern elektrischer Energie mit N ≥ 2, wobei der Tank (BB) eine untere Platte (PI) umfasst, die dazu bestimmt ist, unterhalb der Empfangszonen (ZAn) installiert zu werden, **dadurch gekennzeichnet, dass** die untere Platte (PI) Querzonen (ZTj) umfasst, die dazu bestimmt sind unter jeder Querstrebe (Tj) angeordnet sein und jeweils mindestens zwei Unterzonen (SZ) umfassen, die in Richtung der entsprechenden Querstrebe (Tj) eingeprägt sind, um um sie herum (SZ) Grenzflächenzonen (ZI) zu definieren, die geeignet sind, im Falle einer Deformation Verformungen aufzunehmen eine Auswirkung.

2. Tablett nach Anspruch 1, **dadurch gekennzeichnet, dass** jede Teilzone (SZ) eine allgemeine Halbkugelform aufweist.

3. Tablett nach Anspruch 1 oder 2, **dadurch gekennzeichnet, dass** jede Unterzone (SZ) auf einer ersten Höhe geprägt ist, die strikt geringer ist als eine zweite Höhe, die eine Grenzfläche (ZI) von einer Unterseite eines Kreuzes (Tj) trennt.

4. Tablett nach einem der Ansprüche 1 bis 3, **dadurch gekennzeichnet, dass** es i) Stützplatten (PS) umfasst, die fest und jeweils an einer Außenfläche (FE1) der unteren Platte (PI) unter jeder der Unterzonen befestigt sind ( SZ) und jeweils umfassend ein Durchgangsloch (TT1) für den Durchgang eines Kopplungselements (ECP) und ii) ein Schutzgitter (EP), das fest an den Trägerplatten (PS) und unterhalb dieser (PS) befestigt ist. , über die genannten Kopplungselemente (ECP).

5. Batterie (BV), die zur Ausrüstung eines Landfahrzeugs geeignet ist und in N durch einen Steg (Tj) voneinander getrennten Aufnahmezonen (ZAn) einen Satz (En) von mindestens einem Speichermodul (MS) elektrischer Energie umfasst , mit N ≥ 2, und mindestens einem Wärmetauscher (EC), der unterhalb oder oberhalb der Aufnahmezonen (ZAn) installiert ist, **dadurch gekennzeichnet, dass** es außerdem einen Tank (BB) nach einem der vorhergehenden Ansprüche umfasst, der unterhalb der Aufnahmezonen installiert ist (ZAn).

6. Batterie nach Anspruch 5, **dadurch gekennzeichnet, dass** der Wärmetauscher (EC) unterhalb der Aufnahmezonen (ZAn) installiert ist und gegenüber jeder Teilzone (SZ) ein Durchgangsloch (TT2) mit einer schnittähnlichen Form aufweist eine horizontale Ebene zumindest eines zentralen Teils der entsprechenden Subzone (SZ).

7. Batterie nach Anspruch 5 oder 6, **dadurch gekennzeichnet, dass** sie einen Rahmen (CB) umfasst, der jeden Querträger (Tj) umfasst, in dem die Aufnahmezonen (ZAn) definiert sind, und der eine Außenfläche (FE2) aufweist, an der diese anliegen Platte (PI) ist in einer Randzone (ZP) fest befestigt.

8. Landfahrzeug, **dadurch gekennzeichnet, dass** es eine Batterie (BV) nach einem der Ansprüche 5 bis 7 umfasst.

9. Fahrzeug nach Anspruch 8, **dadurch gekennzeichnet, dass** es eine Struktur aufweist, an der die Batterie (BV) befestigt ist.

10. Fahrzeug nach Anspruch 8, **dadurch gekennzeichnet, dass** es eine Struktur aufweist, die i) einen Rahmen definiert, der jeden Querträger (Tj) umfasst und in dem die Aufnahmezonen (ZAn) definiert sind, und ii) die fest daran befestigte untere Platte (PI). eine Außenfläche des Rahmens.

## Claims

1. Container (BB) for a battery (BV) of a land vehicle comprising N reception zones (ZAn) separated from each other by a crosspiece (Tj) and each comprising a set (En) of at least one module (MS) for storing electrical energy, with N ≥ 2, said container (BB) comprising a lower plate (PI) intended to be installed below said reception zones (ZAn), **characterized in that** said lower plate (PI) comprises transverse zones (ZTj) intended to be placed under each crosspiece (Tj) and each comprising at least two sub-zones (SZ) stamped towards the corresponding crosspiece (Tj) in order to define around them (SZ) interface zones (ZI) capable of absorbing deformations in the event of an impact.

2. Container according to claim 1, **characterized in that** each sub-zone (SZ) has a generally semi-spherical shape.

3. Tray according to claim 1 or 2, **characterized in that** each sub-zone (SZ) is stamped over a first height strictly less than a second height separating an interface zone (ZI) from a lower face of a crosspiece (Tj).

4. Tray according to one of claims 1 to 3, **characterized in that** it comprises i) support plates (PS) fixedly secured and respectively to an external face (FE1) of said lower plate (PI) under each of said sub-zones (SZ) and each comprising a through hole (TT1) for the passage of a coupling element (ECP), and ii) a protective screen (EP) fixedly secured to said support plates (PS), and below the latter (PS), via said coupling elements (ECP).

5. Battery (BV) suitable for equipping a land vehicle and comprising, in N reception zones (ZAn) separated from each other by a crosspiece (Tj), a set (En) of at least one module (MS) for storing electrical energy, with N ≥ 2, and at least one heat exchanger (EC) installed below or above said reception zones (ZAn), **characterized in that** it further comprises a tank (BB) according to one of the preceding claims, installed below said reception zones (ZAn).

6. Battery according to claim 5, **characterized in that** said heat exchanger (EC) is installed below said reception zones (ZAn) and comprises, opposite each sub-zone (SZ), a through hole (TT2) having a shape similar to a section in a horizontal plane of at least a central part of the corresponding sub-zone (SZ).

7. Battery according to claim 5 or 6, **characterized in that** it comprises a frame (CB) comprising each crosspiece (Tj), in which said reception zones (ZAn) are defined, and comprising an external face (FE2) to which said lower plate (PI) is fixedly secured, in a peripheral zone (ZP).

8. Land vehicle, **characterized in that** it comprises a battery (BV) according to one of claims 5 to 7.

9. Vehicle according to claim 8, **characterized in that** it comprises a structure to which said battery (BV) is secured.

10. Vehicle according to claim 8, **characterized in that** it comprises a structure defining i) a frame comprising each crosspiece (Tj) and in which said reception zones (ZAn) are defined, and ii) said lower plate (PI) fixedly secured to an external face of said frame.
